# EUROPEAN PATENT APPLICATION

(11) **EP 2 772 928 A1**
(43) Date of publication of application: **03.09.2014**
(21) Application number: 13157477.4
(22) Date of filing: 01.03.2013
(51) Int. Cl.: H01H 3/28

(54) **A high voltage switching device**

(71) Applicant: ABB Technology AG, 8050 Zürich (CH)
(72) Inventor: Errico, Ennio, 24040 Fornovo San Giovanni (BG) (IT); Mingiardi, Roberto, 26900 Lodi (IT)
(74) Representative: De Santis, Giovanni

(57) **Abstract**

HV switching device (100) comprising a casing (1) containing at least a first fixed contact (2) and a second fixed contact (3) which are positioned spaced apart from each other and are suitable to be connected to two corresponding power terminals (4,5), a first movable contact (12) and a second movable contact (13) which are spaced apart from each other and can be actuated so as to couple with the first fixed contact and the second fixed contact, respectively. At least one of the first fixed contact and first movable contact has a respective body shaped so as the first movable contact couples with the first fixed contact in at least a first coupling position and in a second coupling position which are spaced apart from each other, and at least one of the second fixed contact and second movable contact has a respective body shaped so as the second movable contact couples with the second fixed contact in at least a third coupling position and a fourth coupling position which are spaced apart from each other.

## Description

The present disclosure relates to a high voltage (hereinafter "HV") switching device, i.e. for applications with rated voltage above 1kV.

It is well known in the art the use of switching or switchgear devices, such as disconnectors, earthing switches, combined disconnector-earthing switch devices, et cetera.

Basically, these devices have a casing inside which there are provided one or more fixed contacts and corresponding movable contacts; the movable contacts, when actuated, electrically engage or disengage each with/from an associated fixed contact so as to realize desired circuital configurations of the electrical network along which the switching device is installed.

In this way, and depending on the specific applications, it is possible for example to electrically feed or disconnect simultaneously or in alternative, one or more branches of a circuit and/or loads connected to the switching device, as well as to connect such branches or loads to ground potential.

Over the years these devices have been proposed according to various solutions meant to achieve an optimum balance between capabilities to perform the required performances and need to reduce manufacturing and installation costs, as well as space occupation.

One example of such known devices is for example described in patent document EP1121738, wherein a combined disconnector and earthing switch device is used in a more complex hybrid switchgear device.

In particular, the combined device therein disclosed comprises one or more movable contacts which have the form of a knife or blade and are mounted rotating on a shaft; the blade- or knife-shaped movable contacts couple each with a corresponding fixed contact so as to realize a plurality of desired circuital configurations.

Although such advanced and very effective devices allow performing properly all functions required with a high flexibility of combinations, customers always require devices which are highly performing and more compact in order to further save material costs and to fit smart substation designs, such as mobile substations.

The present disclosure is aimed at fulfilling such a requirement and provides a high voltage (HV) switching device comprising a casing containing at least a first fixed contact and a second fixed contact which are positioned spaced apart from each other and are suitable to be connected to two corresponding power terminals, a first movable contact and a second movable contact which are spaced apart from each other and can be actuated so as to couple with said first fixed contact and said second fixed contact, respectively, **characterized in that** at least one of said first fixed contact and first movable contact has a respective body shaped so as the first movable contact can couple with said first fixed contact in at least a first coupling position and in a second coupling position which are spaced apart from each other, and wherein at least one of said second fixed contact and second movable contact has a respective body shaped so as the second movable contact can couple with said second fixed contact in at least a third coupling position and a fourth coupling position which are spaced apart from each other.

Further characteristics and advantages will become apparent from the description of some preferred but not exclusive exemplary embodiments of a HV switching device according to the present disclosure, illustrated only by way of non-limitative examples with the accompanying drawings, wherein:
Figure 1 is a perspective view of a HV switching device according to the invention, in an embodiment as a disconnector;
Figure 2 is a perspective view of a HV switching device according to the invention, in an embodiment as a combined disconnector-earthing switch device;
Figure 3 is a perspective view showing an embodiment of movable contacts used in a HV switching device according to the present disclosure;
Figure 4 is a perspective view showing an embodiment of a fixed contact used in a HV switching device according to the present disclosure;
Figure 5 is a cross section of the HV switching device according to the present disclosure;
Figures 6-9 schematically show, in sequence, a plurality of possible different positions of the switching device of figure 2;
Figure 10 schematically shows a hybrid switchgear comprising a switching device according to the present disclosure.

It should be noted that in the detailed description that follows, identical or similar components, either from a structural and/or functional point of view, have the same reference numerals, regardless of whether they are shown in different embodiments of the present disclosure; it should also be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a whole combinations of components, or even to any part of a combination of components, it has to be understood that it means and encompasses correspondingly either the structure, and/or configuration and/or form and/or positioning of the related component or part thereof, or combinations of components or part thereof, such term refers to.

Finally, the HV switching device of the present disclosure is particularly suitable to be used in a gas-insulated or hybrid switchgear, e.g. of the type marketed by the ABB^{®} group under the commercial name of PASS™, and it will be described by making particular reference to its application in such a type of switchgear without intending in any way to limit its possible scope of applications as a stand-alone device or in combination with other types of electrical switchgear or devices.

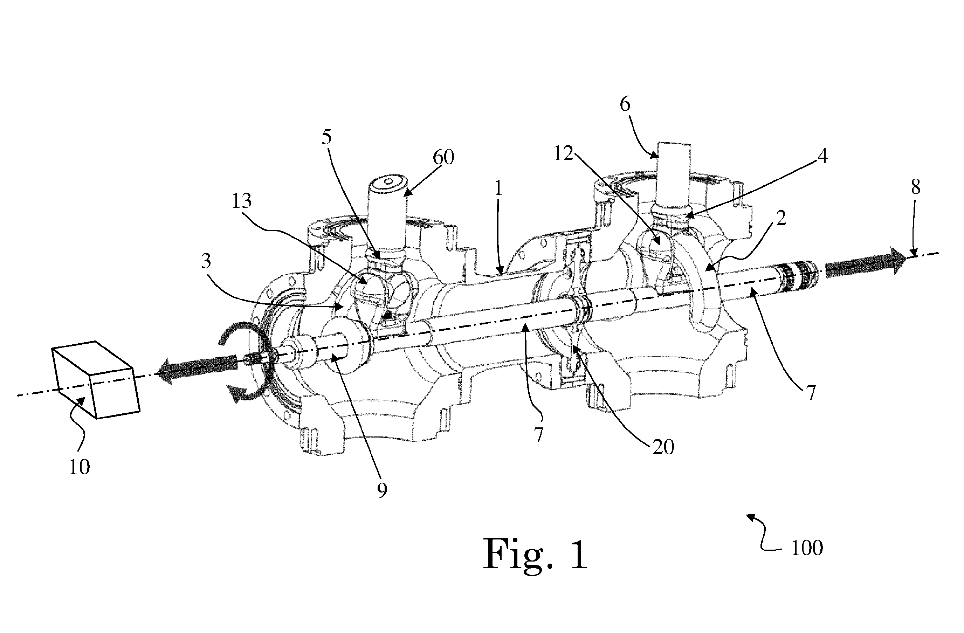

A high voltage ("HV") switching device, globally indicated with the reference number 100, is represented in figure 1 in an embodiment as a disconnector.

As shown, the device 100 comprises a casing 1 which can be constituted by a single part, or as illustrated in figure 1, it can comprise two or more parts mechanically connected to each other. The casing 1 contains at least a first fixed contact 2 and a second fixed contact 3 which are positioned spaced apart from each other and are suitable to be connected to two corresponding power connection terminals 4, 5 for realizing input/output connections into/out from the device 100 itself.

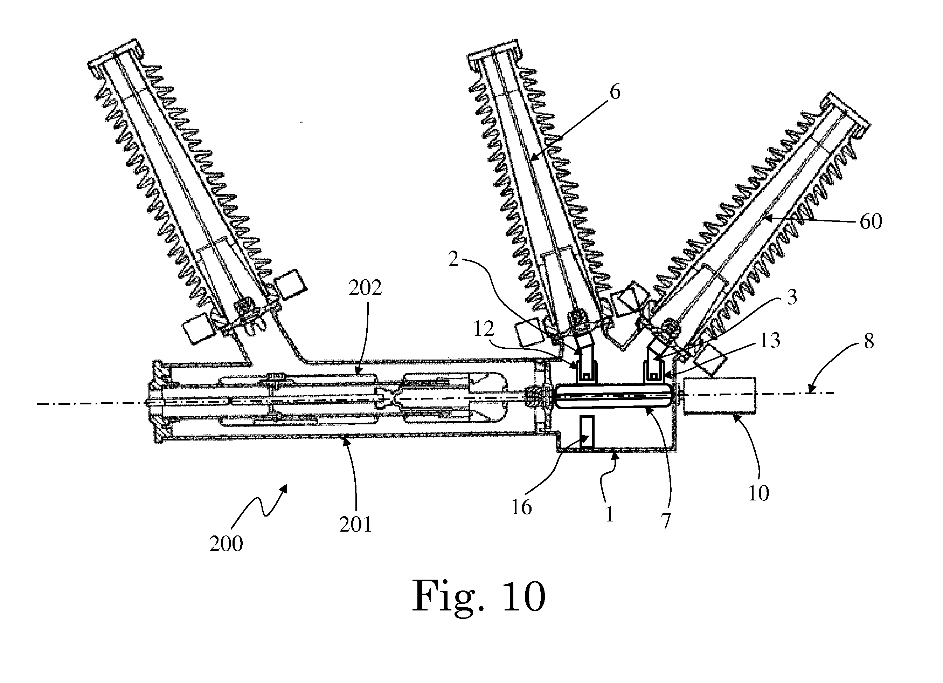

For example, the first and second fixed contacts 2-3, by means of the respectively associated first power connection terminal 4 and second power connection terminal 5, can be electrically connected in input to and output from the device 100 with a phase of an electrical line, respectively, for instance using corresponding cables, or rods, or bars 6, 60 as schematically shown in the figures and in particular in figure 10. Alternatively, the first connection terminal 4 (and associated first fixed contact 2) can be connected in input from an electrical line and the second terminal 5 (and associated second fixed contact 3) can be connected in output towards a power or distribution transformer, respectively; however, other connections can be realized according to the various possible applications.

Inside the casing 1 there are also provided a first movable contact 12 and a second movable contact 13 which are spaced apart from each other and can be actuated simultaneously by suitable actuation means so as to electrically couple with the first fixed contact 2 and the second fixed contact 3, respectively.

Preferably, in the device 100 according to the present disclosure, at least one of the first fixed contact 2 and the first movable contact 12 has a respective body shaped so as the first movable contact 12, when actuated, engages/couples with the first fixed contact 2 in at least a first coupling position (A) and in a second coupling position (B) which are spaced apart from each other; further, at least one of the second fixed contact 3 and the second movable contact 13 has a respective body shaped so as the second movable contact 13, when actuated together with the first movable 12 contact, engages/couples with said second fixed contact 3 in at least a third coupling position (C) and a fourth coupling position (D) which are spaced apart from each other.

As it will be described more in details hereinafter, in the device 100 according to the present disclosure, at least one of the first fixed contact 2 and first movable contact 12 has a respective body shaped so as the first movable contact 12, when actuated couples/engages with the first fixed contact 2 in at least a first coupling position (A) and in a second coupling position (B) which are angularly spaced from each other; at such coupling positions the first movable contact 12 is still and electrically coupled with the first fixed contact 2. Further at least one of the second fixed contact 3 and second movable contact 13 has a respective body shaped so as the second movable contact 13, when actuated together with the first movable contact 12, couples/engages with the second fixed contact 13 in at least a third coupling position (C) and a fourth coupling position (D) which are angularly spaced apart from each other; at such third and fourth coupling positions the second movable contact 13 is still and electrically coupled with the second fixed contact 3.

Preferably, and with respect to the rotation axis 8, one of the first or second couplings positions (A) (B) of the first fixed contact 2 with the first movable contact 12 is angularly substantially coincident with one of the third or fourth coupling positions (C) (D) of the second fixed contact 3 with the second movable contact 13.

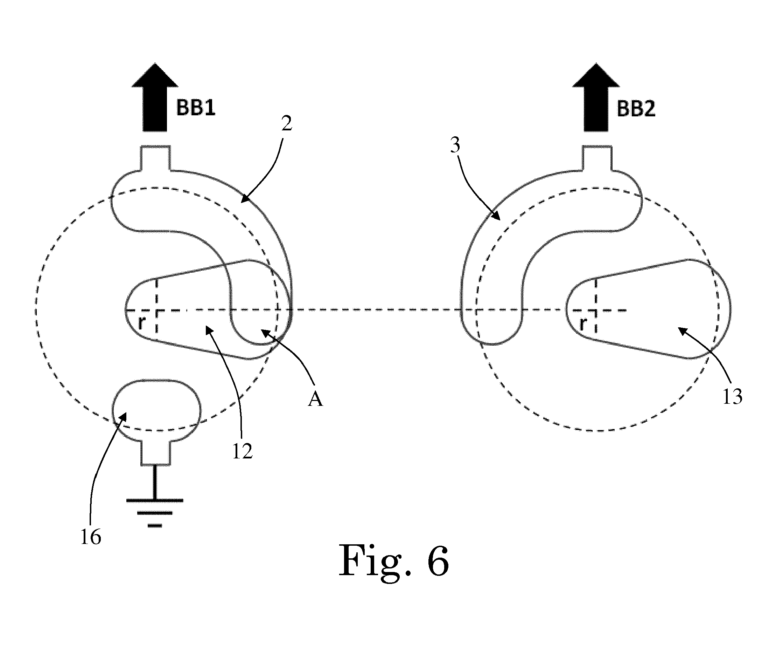

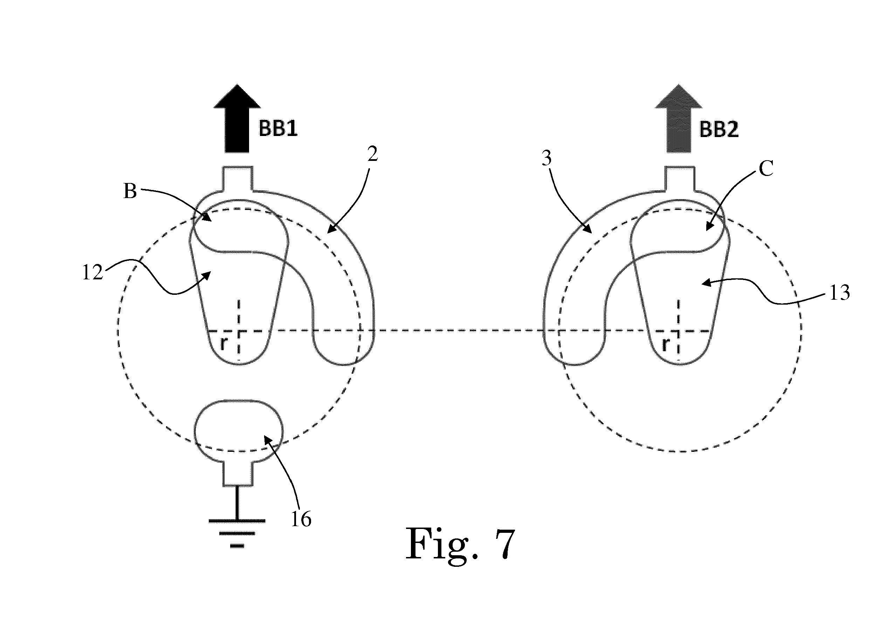

In particular, as illustrated in figures 6-7, the first movable contact 12 and the first fixed contact 2 couple together in two predefined couplings positions (A) and (B) which are angularly spaced from each other, preferably of about 90°. Likewise, as illustrated in figures 7-8, the second movable contact 13 and the second fixed contact 3 couple together in two predefined couplings positions (C) and (D) which are angularly spaced from each other, preferably of about 90°.

In the embodiments illustrated, and as visible from figure 7, the coupling position (B) between the first fixed and movable contacts 2, 12 is angularly coincident with the coupling position (C) between the second fixed and movable contacts 3, 13.

In the embodiments illustrated, the first movable contact 12 and the second movable contact 13 are mounted on and solidly move together with an actuation element 7.

In particular, the actuation element 7 is placed inside the casing 1 rotating about a reference axis 8.

In practice, the actuating element 7 rotates around the reference rotation axis 8 with the moving contacts 12 and 13 which rotate simultaneously to each other and solidly together with the actuation element 7; in turn, the first fixed contact 2 is positioned on the rotation path of the first movable contact 12 and the second fixed contact 3 is positioned on the rotation path of the second movable contact 13.

Accordingly, the predefined first and second coupling positions (A) and (B) are angularly spaced from each other along the rotation path of the first movable contact 12, and the predefined third and fourth coupling positions (C) and (D) are angularly spaced from each other along the rotation path of the second movable contact 13.

The actuation element 7 can be constituted for example by a rod or shaft 7 which can be formed by one single piece, as for instance illustrated in figure 10, or by two or more pieces connected together as for example illustrated in figures 1-2.

One end of the rotating actuation element 7 is operatively connected, e.g. by means of an insulating rod 9, to actuation means comprising for instance an electric motor 10 which is positioned outside the casing 1 and supplies the energy required to rotate the actuating element 7 and the contacts 12, 13 solidly connected therewith; the other end of the actuation element 7 can be connected to one side of the casing 1, e.g. by means of bearings, when the device 100 is used as a stand-alone component, or it can be connected operatively to other elements in case the switching device 100 is associated to or used in more complex switchgear devices. For instance, in the embodiment illustrated in figure 10 the switching device 100 according to the present disclosure is a component of a hybrid switchgear 200 wherein the casing 1 is connected to a further casing 201 housing for example a circuit breaker 202. In this case the end of the actuating element 7 is operatively connected to such a circuit breaker 202.

In the embodiments illustrated, when the device 100 is seen in cross-section (namely a plane perpendicular to the reference rotation axis 8), the first movable contact 12 and the second movable contact 13 are mounted on the actuating element 7 substantially aligned to each other along the reference axis 8.

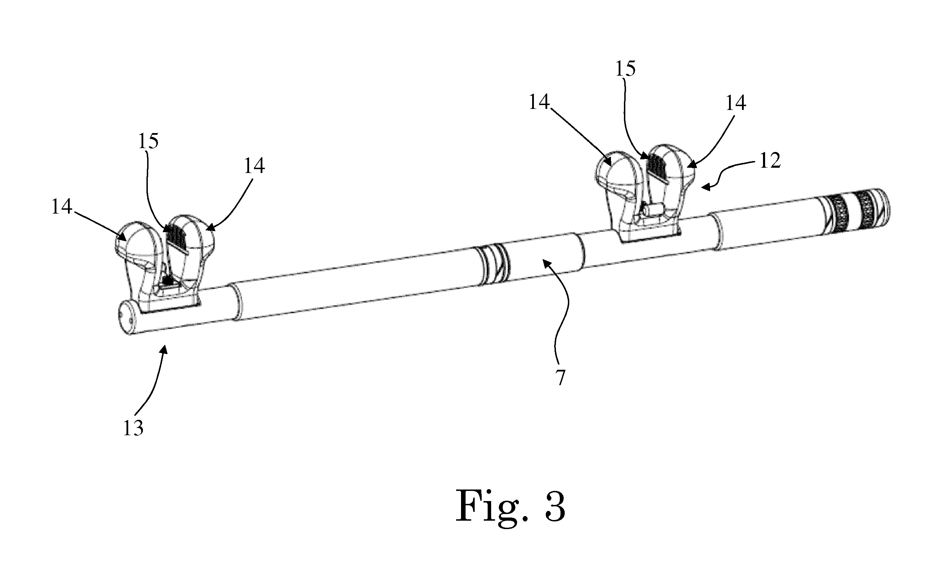

As illustrated in figure 3, the first movable contact 12 and the second movable contact 13 comprise a body having a U-shape or gripper-shape; the internal surfaces of the lateral facing sides 14 of the U-shaped or gripper-shaped body are provided with contact reeds or strips 15 suitable to electrically match with corresponding parts of the fixed contacts 2, 3 at the respective predefined coupling regions (A) or (B), and (C) or (D).

The two movable contacts 12, 13, may not be identical to each other; however, according to the present disclosure, the two movable contacts 12 and 13 preferably are substantially identical to each other. In this way, manufacturing costs are optimized.

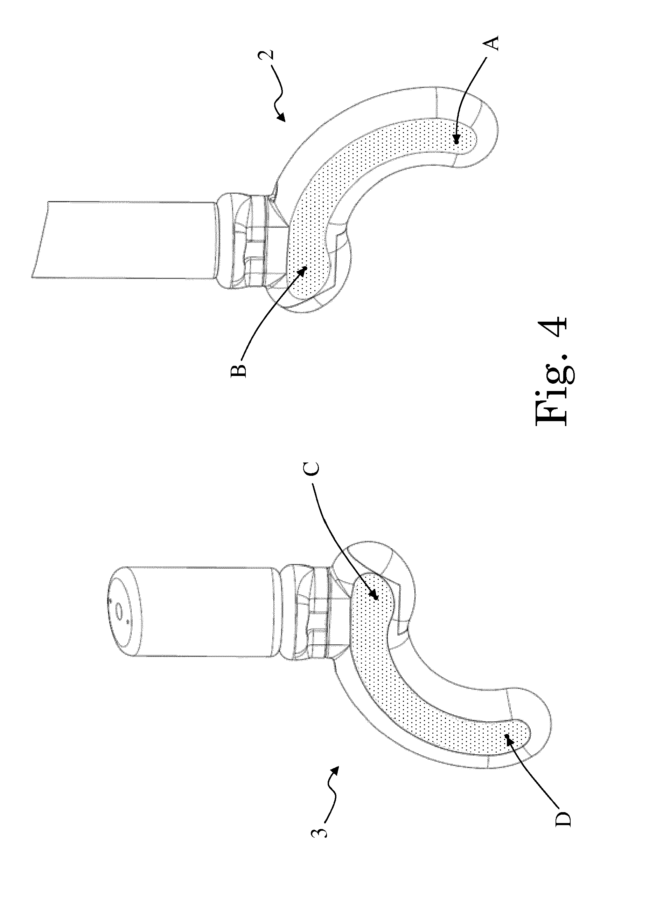

As illustrated in the relevant figures, the first fixed contact 2 comprises a body having a curved-blade shape extending for a certain angular sector, e.g. of about 90° or more; in particular, as shown in figure 4, the external side surfaces of the curved-blade body of the first fixed contact 2 are silver-plated at least at the regions of its body defining and corresponding to the first and second coupling positions (A), (B). In the exemplary embodiment illustrated in figure 4, the entire surface from the coupling region (A) to the coupling region (B) is silver-plated on both sides, namely an arc of at least about 90° is covered, on the side surfaces, with silver plates; in this way, while moving, the first movable contact 12 touches a useful and continuous electrical contact surface of about 90° on the first fixed contact 2 between the two predefined coupling positions (A), (B), at which the first movable contact 12 stops and remains still and electrically connected to the first fixed contact 2.

Clearly, it is possible for example to limit the use of coating silver plates just at the regions of the predefined coupling positions (A), (B) while the external side surfaces of the curved blade in between such coupling regions/positions (A)(B) can be left uncoated.

It is even possible to have the regions at the coupling regions/positions (A), (B) ticker than the central part interconnecting the two coupling regions; in this way, the first movable contact 12, when rotating, touches and engages with the first fixed contact 2 only at the predefined coupling regions (A) and (B).

In turn, also the second fixed contact 3 comprises a body having a curved-blade shape extending for a certain angular sector, e.g. of about 90° or more; as for the first fixed contact 2, also the external side surfaces of the curved-blade body of the second fixed contact 3 are silver-plated at least at the regions defining and corresponding to the third and fourth coupling positions (C), (D). In the exemplary embodiment illustrated, the entire surface from the coupling region (C) to the coupling region (D) is silver-plated on both sides, namely an arc of at least about 90° is covered, on the side surfaces, with silver plates; hence, while moving, the second movable contact 13 touches a useful and continuous electrical contact surface of about 90° on the second fixed contact 3 between the two predefined coupling positions (A), (B), at which the second movable contact 13 stops and remains still and electrically connected to the second fixed contact 3.

Clearly, also for the second fixed contact 3 it is possible to limit the use of coating silver plates just at the regions of the predefined coupling regions/positions (C), (D) while the external side surfaces of the curved blade in between such coupling positions (C)(D) can be left uncoated.

Also in this case it is even possible to have the regions at the coupling regions/positions (C), (D) ticker than the central part interconnecting such two coupling regions; in this way, the second movable contact 13, when rotating, touches and engages with the second fixed contact 3 only at the predefined coupling regions (C) and (D).

Preferably, the first and second fixed contacts 2, 3 are mounted inside the casing 1 opposite to each other with respect to said reference axis 8; more preferably, the first and second fixed contacts 2, 3 are substantially identical to each other so the embodiment illustrated to figure 4 can be applied to both fixed contacts 2, 3.

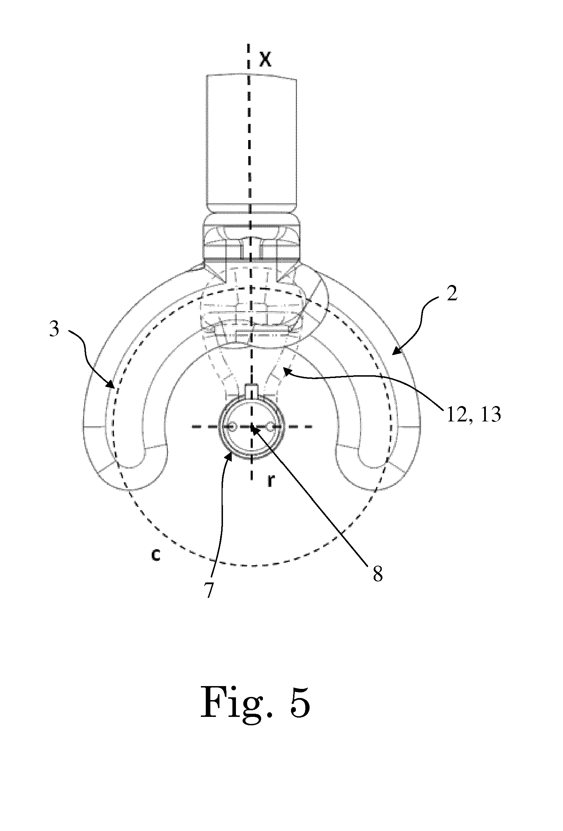

In particular, the fixed contacts 2, 3 are mirror-positioned to each other with respect to a vertical plane X containing the rotation axis, as for example illustrated in figure 5.

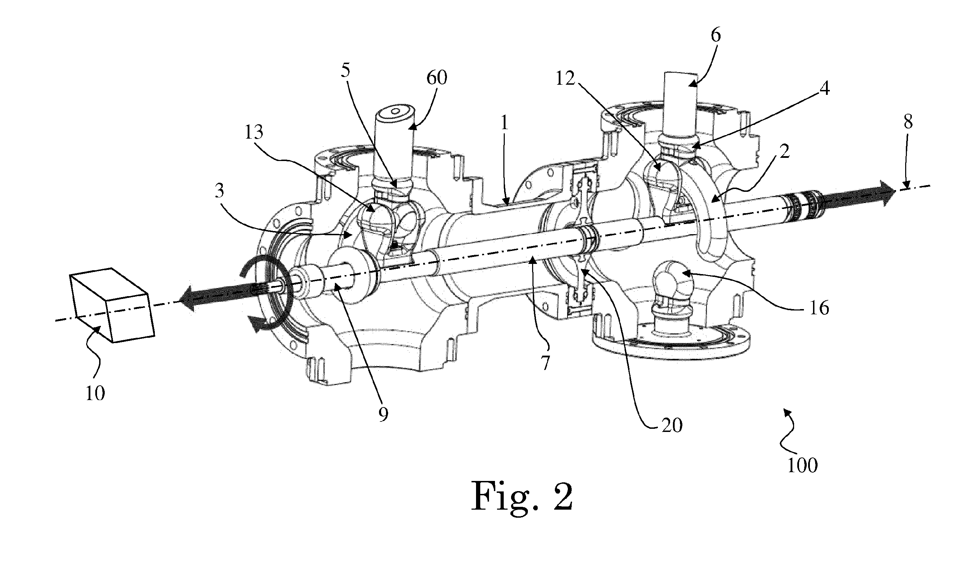

In the embodiment illustrated in figure 2, the switching device 100 comprises, in addition to all elements previously described for the embodiment of figure 1, a further fixed contact, namely, an earthing fixed contact 16 for connection to ground potential; in this way, the switching device 100 assumes the configuration of a combined disconnector-earthing switch device.

In the exemplary embodiment illustrated, the earthing contact 16 is placed inside the casing 1 along the rotation path of the first movable contact 12 and at a position such that the first movable contact 12 cannot simultaneously couple with the first fixed contact 2 and the earthing fixed contact 16.

The operations of a switching device 100 according to the present disclosure will be now briefly described with reference to its embodiment of figure 2.

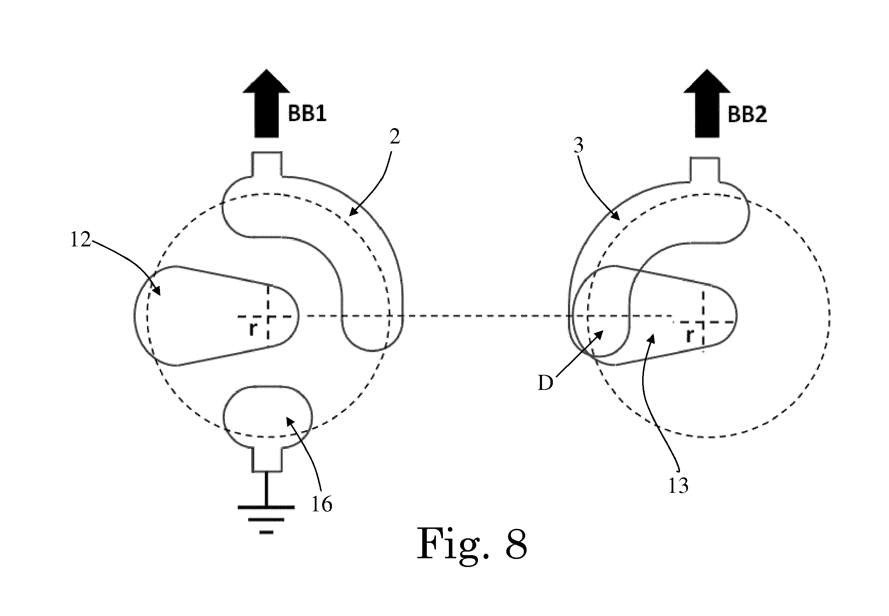

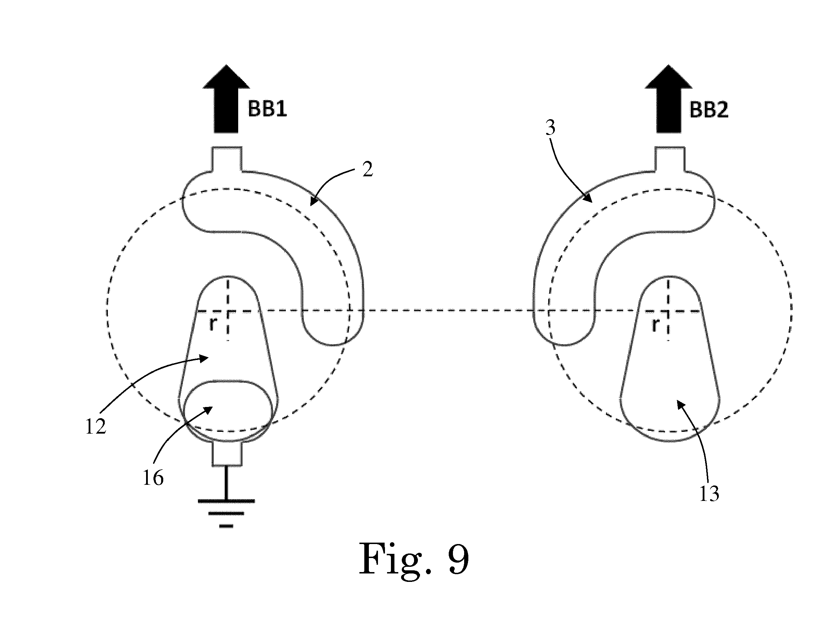

For example, figure 6 schematically represents an operative condition where the first moving contact 12 is engaged with the first fixed contact 2 in the coupling position (A) and the second movable contact 13 is disconnected from the corresponding second fixed contact 3; in this condition, for instance the first bus bar 6 is electrically connected (in input or output) with the device 100 while the second bus bar 60 is disconnected. If the electric motor 10 actuates the actuation element 7 to rotate, e.g. of 90° degrees counterclockwise, the movable contacts 12, 13 rotate rigidly therewith and the first movable contact 12 stops and engages the first fixed contact 2 at the predefined second coupling position (B), while the second movable contact 13 stops and engages the second fixed contact 2 at the predefined third coupling position (C), as illustrated in figure 7. In this position, for example both bus bars 6 and 60 are electrically connected (in input or output) with the switching device 100. From this position, by further rotating the actuation element 7, e.g. of additional 90° degrees counterclockwise, the first movable contact 12 is disconnected from the first fixed contact 2, while the second movable contact 13 stops and engages with the second fixed contact 3 at the predetermined fourth coupling position (D), as shown in figure 8. In this position, for example the first bus bar 6 is disconnected while the second bus bar 60 is electrically connected (in input or output) with the device 100. A further rotation of 90° counterclockwise of the actuation element 7 brings the first movable contact 12 to stop and engage the earthing fixed contact 16 which is at ground potential, while the second movable contact is disconnected from the second fixed contact 3, as illustrated in figure 9. In this position, for example both bus bars 6 60, are disconnected and the device 100 is connected to ground potential.

It has been found that the switching device 100 according to the present disclosure offers some improvements over prior art solutions; indeed, thanks to the embodiments previously described, and in particular due to the configuration and mutual position of its various elements and especially the various contacts, the switching device 100 as a whole is more compact if compared to known devices of equivalent rate and performances. Indeed, in the switching device 100 according to the present disclosure each operative position is angularly spaced from the adjacent ones (following and preceding) of about 90°, thus allowing to decrease the diameter or maximum external size of the casing 1, while keeping the required dielectric clearances.

Such results are achieved thanks to a solution which in principle makes the switching device 100 according to the present disclosure easy to be used in connection with different types of electric substations or switchgear combining more electrical devices.

Hence, the present disclosure also encompasses an electric substation or switchgear **characterized in that** it comprises a high voltage switching device 100 of the type previously described and as defined in the appended claims.

The HV switching device 100 thus conceived is susceptible of modifications and variations, all of which are within the scope of the inventive concept as defined in particular by the appended claims; any possible combination of the previously disclosed embodiments/alternatives can be implemented and has to be considered within the inventive concept of the present disclosure; all the details may furthermore be replaced with technically equivalent elements. For example, the casing 1 can be separated in two parts segregated from each other by means of an insulating disc 20 partially illustrated in figures 1 and 2. The switching device 100 can be of the single-pole actuation type in which there are actuation means on each individual phase in order to perform the disconnection operation; as an alternative, the device can be of the three-pole actuation type, in which the energy for performing the disconnection operation on the three phases of the device is supplied by a single motor which is mechanically coupled to the disconnection units of each individual phase. Any of the previously described components may be differently shaped, or used in a different number or parts or elements, or the components previously described can be differently connected with respect to each other, provided they are suitable for the scope they are devised for. For instance, the electric motor 10 can be replaced by any suitable drive or it is possible to use mechanical or hydraulic actuation means, or the terminals 4 and 5 can be realized integral with the associated fixed contacts 2, 3. Manual actuation means can also be provided as an alternative, or as an addition, to the above described actuation means. The silver plates suitable to couple with the reeds or strips 15 can be made of a different material or the reeds or strips 15 themselves can be differently shaped.

## Claims

1. A high voltage (HV) switching device (100) comprising a casing (1) containing at least a first fixed contact (2) and a second fixed contact (3) which are positioned spaced apart from each other and are suitable to be connected to two corresponding power terminals (4, 5), a first movable contact (12) and a second movable contact (13) which are spaced apart from each other and can be actuated so as to couple with said first fixed contact (2) and said second fixed contact (3), respectively, **characterized in that** at least one of said first fixed contact (2) and first movable contact (12) has a respective body shaped so as the first movable contact (12) can couple with said first fixed contact (2) in at least a first coupling position (A) and in a second coupling position (B) which are spaced apart from each other, and wherein at least one of said second fixed contact (3) and second movable contact (13) has a respective body shaped so as the second movable contact (13) can couple with said second fixed contact (3) in at least a third coupling position (C) and a fourth coupling position (D) which are spaced apart from each other.

2. The switching device according to claim 1, wherein at least one of said first fixed contact (2) and first movable contact (12) has a respective body shaped so as the first movable contact (12) couples with said first fixed contact (2) in at least a first coupling position (A) and in a second coupling position (D) which are angularly spaced from each other, and wherein at least one of said second fixed contact (3) and second movable contact (13) has a respective body shaped so as the second movable contact (3) couples with said second fixed contact (13) in at least a third coupling position (C) and a fourth coupling position (D) which are angularly spaced apart from each other.

3. The switching device according to one or more of the previous claims, wherein said first movable contact (12) and said second movable contact (13) are mounted on and solidly move together with an actuation element (10), said actuating element (7) being placed inside said casing (1) rotating about a reference axis (8), and wherein said first fixed contact (2) is positioned on the rotation path of said first movable contact (12) and said second fixed contact (3) is positioned on the rotation path of said second movable contact (13), said first and second coupling positions being angularly spaced from each other along said rotation path of the first movable contact (12), and said third and fourth coupling positions being angularly spaced from each other along said rotation path of the second movable contact (13).

4. The switching device according to claim 3, wherein, with respect to said rotation axis (8) one of the first or second couplings positions (A) (B) of the first fixed contact (2) with the first movable contact (12) is angularly coincident with one of the third or fourth coupling positions (C) (D) of the second fixed contact 3 with the second movable contact 13.

5. The switching device according to claim 3, wherein said first movable contact (12) and said second movable contact (13) are mounted on said actuating element (7) substantially aligned to each other along said reference axis (8).

6. The switching device according to one or more of the previous claims, wherein said first and second movable contacts (12, 13) comprise a body having a U- or gripper shape whose internal surfaces of its facing sides (14) are provided with contact reeds or strips (15).

7. The switching device according to one or more of the previous claims, wherein said first movable contact (12) and said second movable contact (13) are substantially identical to each other.

8. The switching device according to one or more of the previous claims, wherein said first fixed contact (2) comprises a body having a curved-blade shape.

9. The switching device according to claim 7, wherein the external surfaces of said curved-blade body of the first fixed contact (2) are silver-plated at least at the regions corresponding to said first and second coupling positions (A, B).

10. The switching device according to one or more of the previous claims, wherein said second fixed contact (3) comprises a body having a curved blade shape.

11. The switching device according to claim 9, wherein the external surfaces of said curved-blade body of the second fixed contact (2) are silver-plated at least at the regions corresponding to said third and fourth coupling positions (C, D).

12. The switching device according to one or more of the previous claims, wherein said first and second fixed contacts (2, 3) are substantially identical to each other and mirror-positioned to each other with respect to a reference vertical plane (X) containing said rotation axis (8).

13. The switching device according to one or more of the previous claims, wherein it further comprises an earthing fixed contact (16) for connection to ground potential which is positioned inside said casing (1) on the rotation path of said first movable contact (12) and at a position such that said first movable contact (12) cannot simultaneously couple with said first fixed contact (2) and said earthing fixed contact (16).

14. An electric substation **characterized in that** it comprises at least one high voltage switching device (100) according to one or more of the previous claims.

15. Electric switchgear **characterized in that** it comprises a high voltage switching device (100) according to one or more of claims 1-13.
